# EUROPEAN PATENT SPECIFICATION

(11) **EP 4 371 078 B1**
(45) Date of publication and mention of the grant of the patent: **20.05.2026**
(21) Application number: 21769283.9
(22) Date of filing: 19.08.2021
(51) Int. Cl.: G06T 17/20, G06T 19/20, B33Y 50/00

(54) **PROCESSING PIPELINES FOR GENERATION OF FACETED OBJECT REPRESENTATIONS FROM VOXEL DATA**
VERARBEITUNGSPIPELINES ZUR ERZEUGUNG FACETTIERTER OBJEKTDARSTELLUNGEN AUS VOXELDATEN
TRAITEMENT DE PIPELINES POUR LA GÉNÉRATION DE REPRÉSENTATIONS D'OBJETS À FACETTES À PARTIR DE DONNÉES DE VOXELS

(43) Date of publication of application: 22.05.2024
(73) Proprietor: Siemens Industry Software Inc., Plano, TX 75024-6612 (US)
(72) Inventor: YAO, Wenjie, Monmouth Junction, New Jersey 08852 (US); AMETA, Gaurav, Robbinsville, New Jersey 08536 (US); ARVANITIS, Elena, Somerville, New Jersey 08876 (US); NANSON, Peter, Cambridge Cambridgeshire CB1 3HX (GB); COLLINS, Richard, Cambridge Cambridgeshire CB1 7DA (GB); EISENLOHR, John, Cincinnati, Ohio 45245 (US); HERBERT, Donovan, Batavia, Ohio 45103 (US); MUSUVATHY, Suraj Ravi, Princeton Junction, New Jersey 08550 (US)
(74) Representative: HKW Intellectual Property PartG mbB
(86) International application number: PCT/US2021/046630
(87) International publication number: WO 2023/022716

(56) References cited:
- GIBSON S F F: "CONSTRAINED ELASTIC SURFACE NETS: GENERATING SMOOTH SURFACES FROM BINARY SEGMENTED DATA", MEDICAL IMAGE COMPUTING AND COMPUTER-ASSISTED INTERVENTION.MICCAI. INTERNATIONAL CONFERENCE. PROCEEDINGS, XX, XX, 1998, pages 888 - 898, XP000965032
- PETERS R A: "A NEW ALGORITHM FOR IMAGE NOISE REDUCTION USING MATHEMATICAL MORPHOLOGY", IEEE TRANSACTIONS ON IMAGE PROCESSING, IEEE, USA, vol. 4, no. 5, 1995, pages 554 - 568, XP000504551, ISSN: 1057-7149, DOI: 10.1109/83.382491
- SCHUBERT HERMAN R ET AL: "Feature preserving noise removal for binary voxel volumes using 3D surface skeletons", COMPUTERS AND GRAPHICS, ELSEVIER, GB, vol. 87, 22 January 2020 (2020-01-22), pages 30 - 42, XP086119752, ISSN: 0097-8493, [retrieved on 20200122], DOI: 10.1016/J.CAG.2019.12.003
- BENOÃ T HUDSON ET AL: "Sparse parallel Delaunay mesh refinement", PROCEEDINGS OF THE NINETEENTH ANNUAL SYMPOSIUM ON PARALLELISM IN ALGORITHMS AND ARCHITECTURES : SAN DIEGO, CALIFORNIA, USA, JUNE 9 - 11, 2007, ASSOCIATION FOR COMPUTING MACHINERY, US, 9 June 2007 (2007-06-09), pages 339 - 347, XP058380215, ISBN: 978-1-59593-667-7, DOI: 10.1145/1248377.1248435

## Description

### TECHNICAL FIELD

The present invention relates to the generation of faceted object representations for manufacturing.

### BACKGROUND

Computer systems can be used to create, use, and manage data for products, items, and other objects. Examples of computer systems include computer-aided design (CAD) systems (which may include computer-aided engineering (CAE) systems), visualization and manufacturing systems, product data management (PDM) systems, product lifecycle management (PLM) systems, and more. These systems may include components that facilitate the design, visualization, and simulated testing of product structures and product manufacturing processes.

Document "Constrained Elastic Surface Nets: Generating Smooth Surfaces from Binary Segmented Data" by Sarah F. F. Gibson, Medical Image Computing and Computer-Assisted Interventation - MICCAI 1998, discloses a method for creating object surfaces from binary-segmented data that are free from aliasing and terracing artifacts, wherein a net of linked surface nodes is created over the surface of the binary object and the positions of the nodes are adjusted iteratively to reduce energy in the surface net while satisfying the constraint that each element in the surface net must remain within its original surface cube, wherein the constraint ensures that fine detail such as cracks and thin protrusions that are present in the binary data are maintained.

### SUMMARY

The present invention is defined by the enclosed claims.

### BRIEF DESCRIPTION OF THE DRAWINGS

Certain examples are described in the following detailed description and in reference to the drawings.
Figure 1 shows an example of a computing system that supports voxel processing for generation of faceted representations of objects according to the present disclosure.
Figure 2 shows an example pipeline portion to process voxel data according to the present disclosure.
Figure 3 shows an example pipeline portion to generate faceted representations from processed voxel data according to the present disclosure.
Figure 4 shows an example of logic that a system may implement to support voxel processing for generation of faceted representations of objects according to the present disclosure.
Figure 5 shows an example of a computing system that supports voxel processing for generation of faceted representations of objects according to the present disclosure.

### DETAILED DESCRIPTION

With advances in modern technology, topology optimization has become an increasingly prevalent technique for generation of object designs given a set of design space constraints and targets. Topology optimizations may include technologies that modify the material layout of an object to achieve a particular goal, and such technology may be applied in aerospace, mechanical, bio-chemical, automotive, and many other fields to, for example, improve the performance of parts or reduce a required weight of raw materials. In particular, topology optimizations may utilize any number of objective functions to quantitively measure design goals of a topology optimization process. As illustrative examples, objective functions may statistically express compliance, structural requirements, thermal behavior, fluid dynamics, or various characteristics of an object. Loads, boundary conditions, and other constraints may also be used in topology optimizations to enforce specific product requirements (e.g., in addition to or in combination with the objective function).

In some implementations, topology optimization technology may process a discretized 3-dimensional (3D) design space and assign materials to individual discretized elements (e.g., voxels) to achieve an optimized design based on specified design constraints and goals. Outputs of topology optimization processes may take the form of voxel data that can specify a value for each voxel of a discretized 3D design space. Example forms of voxel data include binary voxel data (filled or unfilled with material in the design space) or densitybased voxel data (e.g., assigned to respective corners of a voxel) that indicate a proportion, density, or portion of a voxel to be filled with material. Due to the discretized nature of output voxel data, validation of a object design generated via topology optimization may require conversion to a faceted representation of the object (e.g., a mesh representation). A faceted representation may refer to any representation of an object that uses a set of facets to represent a shape, topology, geometry, or other structure of the object. Faceted representations may take the form of meshes, e.g., surface meshes comprised of triangular, quadrilateral, or various other types and forms of mesh elements that together form the faceted representation. Each facet element (e.g., mesh element) may be defined via a set of points and edges.

While conventional techniques can convert voxel data into faceted object representations, many limitations persist. For example, a basic application of the Marching Cube algorithm to convert voxel data to a triangular mesh may result in highly unsmoothed meshes, as binary voxel can result in undesired local features of a generated mesh such as wavy ridges, bumps, and stair-like surfaces. Mesh smoothing algorithms exist as well, through many are indiscriminate in nature. As such, unfocused application of mesh smoothing on voxel data or a generated mesh may alter the underlying topology of the object design. This may be undesirable as the topology represented by the voxel data (as constructed through a topology optimization process) may satisfy specific design goals and constraints of an object design, and topology modifications by indiscriminate smoothing algorithms may invalidate the particular topology structures and object design features specifically constructed through topology optimizations to meet specific design objectives and targets.

The disclosure herein may provide systems, methods, devices, and logic for voxel processing for generation of faceted representations of objects. The voxel processing features presented herein may include specific computational sequences (e.g., pipelines) to process voxel data of an object, generate a faceted representation of the object from the processed voxel data, and further process the faceted representation to form meshes of increased quality and smoothness. The specific combination of processing steps described herein may yield improved mesh quality and accuracy, for example doing so by preserving the topology of underlying voxel data (constructed via topology optimization) while also smoothing unwanted local features resultant from the voxel conversion process. **In** some implementations, identification and labeling of thin features in voxel data may control subsequent smoothing processes to ensure such local (e.g., thin) features are preserved in the topology of a faceted representation output.

As another voxel processing feature described herein, adaptive pressing of a faceted representation may be performed by which underlying voxel data may be selectively modified based on pressing processes performed on a faceted representation. Through modification of underlying voxel data, the voxel processing features of the present disclosure may increase the effectiveness of mesh pressing processes to adjust facet boundaries and positioning, for example to smooth bumps in a mesh surface or adjust positioning of holes in the mesh surface with increased effectiveness. In doing so, adaptive pressing as described herein may overcome voxel boundary constraints that can limit the degree to which a corresponding faceted representation can be smoothed, and may thus increase the quality of output meshes generated according to the present disclosure.

These and other voxel processing features and technical benefits are described in greater detail herein.

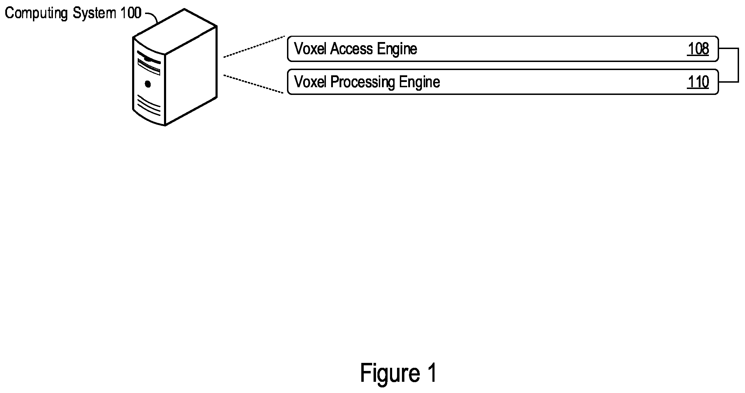

Figure 1 shows an example of a computing system 100 that supports voxel processing for generation of faceted representations of objects according to the present disclosure. The computing system 100 may take the form of a single or multiple computing devices such as application servers, compute nodes, desktop or laptop computers, smart phones or other mobile devices, tablet devices, embedded controllers, and more.

As an example implementation to support any combination of the voxel processing features described herein, the computing system 100 shown in Figure 1 includes a voxel access engine 108 and a voxel processing engine 110. The computing system 100 may implement the engines 108 and 110 (including components thereof) in various ways, for example as hardware and programming. The programming for the engines 108 and 110 may take the form of processor-executable instructions stored on a non-transitory machine-readable storage medium and the hardware for the engines 108 and 110 may include a processor to execute those instructions. A processor may take the form of single processor or multi-processor systems, and in some examples, the computing system 100 implements multiple engines using the same computing system features or hardware components (e.g., a common processor or a common storage medium).

In operation, the voxel access engine 108 may access voxel data that represents an object. In operation, the voxel processing engine 110 may process the voxel data to generate a faceted representation of the object, including by identifying and labeling thin features of the voxel data, smoothing the voxel data in a manner that preserves the thin features in the voxel data, and converting the voxel data, after the smoothing, to form the faceted representation of the object. In operation, the voxel processing engine 110 may also adaptively perform a pressing process on the faceted representation of the object, including by performing the pressing process on the faceted representation of the object, wherein the pressing process is constrained by voxel densities assigned to the voxel data. In adaptively performing the pressing process and responsive to a determination that a pressing reapplication criterion is satisfied, the voxel processing engine 110 may modify the voxel data to obtain modified voxel data, convert the modified voxel data to form the faceted representation of the object, and perform the pressing process on the faceted representation of the object formed through the modified voxel data.

These and other voxel processing features and technical benefits are described in greater detail next.

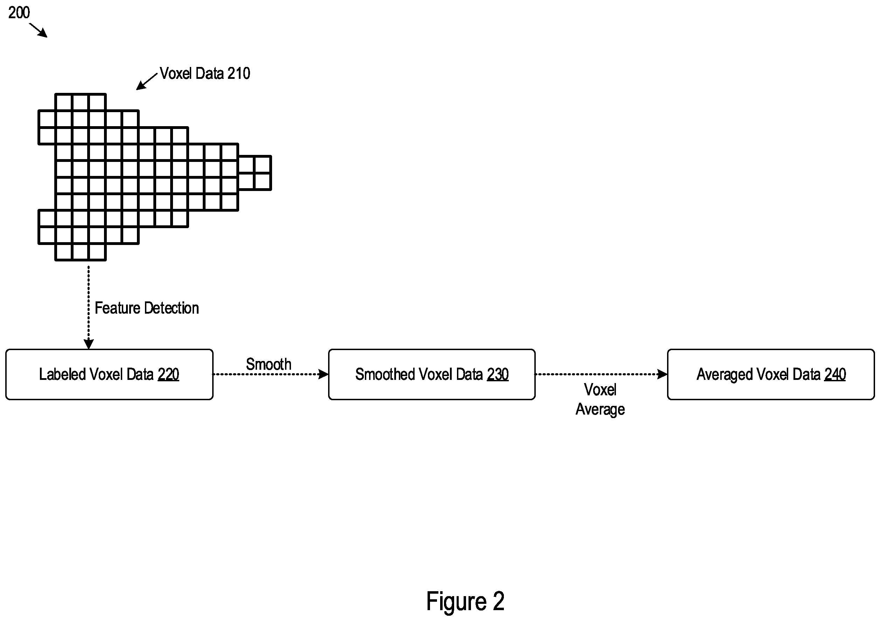

Figure 2 shows an example pipeline portion 200 to process voxel data according to the present disclosure. The voxel access engine 108 and the voxel processing engine 110 may implement, support, or perform any aspect of the pipeline portion 200. The voxel access engine 108 may access voxel data 210. The voxel data 210 may be any data that represents a discretized design space, and each discretized element may be referred to as a voxel. The voxel data 210 may be the output of a topology optimization process, and the voxel data 210 may specify characteristics for the various voxels in the discretized design space. As noted herein, the voxel data 210 may specify density values or binary material values for the voxels in the voxel data 210, and may thus form a topological representation of an object. The voxel access engine 108 may access the voxel data 210 in various ways, for example by loading the voxel data 210 from a memory, receiving the voxel data 210 through network communications (e.g., from a topology optimization system), by itself implementing topology optimization technology to generate the voxel data 210, or in any number of additional or alternative ways.

The voxel processing engine 110 may process the voxel data 210 in support of generating a faceted representation of the object represented through the voxel data 210. Various examples of processing that the voxel processing engine 110 may perform are described herein. As one example, the voxel processing engine 110 may perform a feature detection process on the voxel data 210. To do so, the voxel processing engine 110 may apply morphological opening and closing techniques to analyze neighboring voxels in the voxel data 210. Such morphological processes may be utilized by the voxel processing engine 110 to identify specific features of the voxel data 210. Through feature detection, the voxel processing engine 110 may identify, in the voxel data 210, thin features (e.g., detect solid areas of the voxel data 210 that are only one, two, or any other threshold number of voxels wide on a certain design axis), bumps, gaps, walls, holes, or any other delineated feature of the voxel data 210 that the voxel processing engine 110 may be configured to detect.

For identified features (e.g., detected thin features), the voxel processing engine 110 may label the corresponding voxels in voxel data 210 that form the identified features. Labels may take any identifier value or term that the voxel processing engine 110 may assign, set, or otherwise specify for a given voxel, and such labels may be used to control and govern subsequent smoothing processes in order to preserve topological features of the voxel data 210 or otherwise control voxel or mesh smoothing. As another example of voxel data processing and labeling, the voxel processing engine 110 may assign a sign value to voxels that allows subsequent facets generated for the voxels to move beyond at least one voxel boundary. Such sign changes should be assigned such that movement of facets beyond voxel boundaries will not result in an overall topological change in a final shape of a faceted representation for an object, and the voxel processing engine 110 may assign sign values to the voxels based on the analysis and processing of the voxel data 210.

In the example of Figure 2, the voxel processing engine 110 performs a feature detection process and labels corresponding voxels of the voxel data 210 accordingly. By doing so, the voxel processing engine 110 may generate the labeled voxel data 220, in which specific voxels are labeled with any identified features applicable to or included within the specific voxels.

As another example of processing, the voxel processing engine 110 may smooth voxel data (whether the voxel data 210 or the labeled voxel data 220). In particular, the voxel processing engine 110 may smooth voxel data in a manner that preserves the labeled topological features in the voxel data, e.g., by preserving the thin features labeled in the labeled voxel data 220. As the labeled voxel data 220 may specify which voxels are part of thin features detected within the voxel data 210, the voxel processing engine 110 may smooth the labeled voxel data 220 in a manner that the topology of voxels labeled as a thin feature (and, in some implementations, neighboring voxels within a threshold distance from the thin features) are preserved. Such topology preservation by the voxel processing engine 110 may take the form of complete preservation (which may include volume preservation) or threshold preservation. For instance, the voxel processing engine 110 may constrain any smoothing process applied to the labeled voxel data 220 such that any labeled thin feature cannot change in topology and shape (e.g., complete topological preservation) or only by a threshold percentage (e.g., only 5% deviation from original shape of the voxel data 210). Topology and topological changes may be implied or otherwise specified in various ways, for example as voxel sign values, number of discrete structural components, or in any other suitable manner.

As for the smoothing processes, the voxel processing engine 110 may implement or provide any number of various smoothing algorithms to support the smoothing of voxel data, whether individually or in combination. For instance, the voxel processing engine 110 may perform second-order smoothing as an initial smoothing process to smooth the labeled voxel data 220. The result of the second-order smoothing process may be smoothed voxel data 230, which may have an effect of removing "stair-like" surfaces in voxel-based topologies. However, second-order smoothing may provide an incomplete smoothing of voxel data, as local roughness (e.g., bumps) may persist in the smoothed voxel data 230.

In some implementations, the voxel processing engine 110 may further process the smoothed voxel data 230 through voxel averaging to produce the averaged voxel data 240. To perform voxel averaging, the voxel processing engine 110 may apply any number of techniques, such as mean curvature flow (MCF), adapted mean curvature flow (AMCF), gradient vector flow (GVF), or any combination thereof. In doing so, the voxel processing engine 110 may smooth any local bumps or rough spots from voxel data of an object, which may eventually yield higher-quality output meshes. As such, the voxel processing engine 110 may perform a voxel averaging process on voxel data after the smoothing of the voxel data. Note that in some implementations, the voxel processing engine 110 may additionally or alternatively smooth bumps and local rough spots of an object topology after conversion to a faceted representation.

In any of the ways described herein, the voxel processing engine 110 may process voxel data in support of generation a faceted representation (e.g., mesh) from the processed voxel data. Identification and labeling of specific features in voxel data may increase the effectiveness of subsequent smoothing processes in preserving the topology of the voxel data, which may provide a technical benefit of increased fidelity to the specific object topology determined through topology optimization. Smoothing processes, such as second-order smoothing and/or voxel averaging, may further smooth voxel data to remove unwanted local features, but doing so in a way that preserves the output topology data generated from topology optimization processes.

As such, the combination of voxel processing features presented herein may result in processed voxel data that is of higher fidelity and quality in faithfully representing the topology output of topology optimizations while also smoothing and removing unwanted local features. From the processed voxel data (e.g., as processed via the pipeline portion 200 shown in Figure 2), the voxel processing engine 110 may generate a faceted representation.

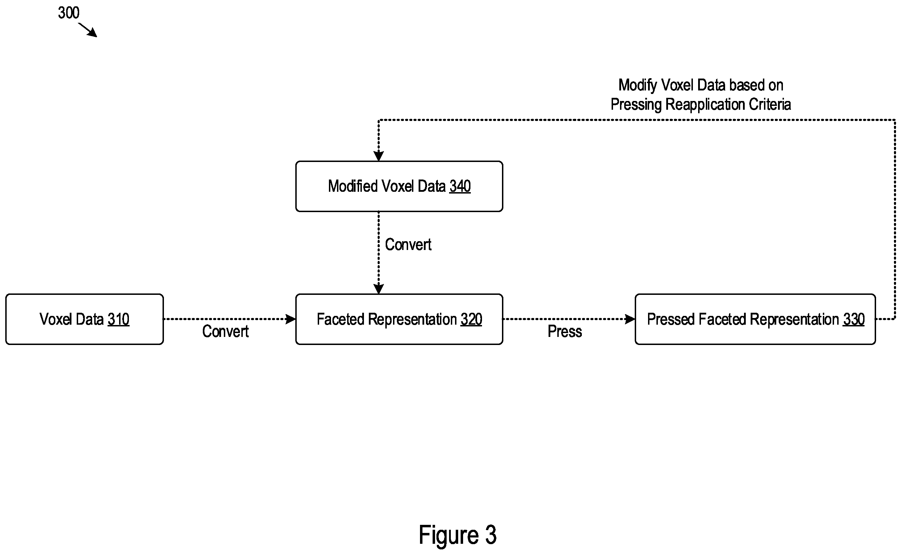

Figure 3 shows an example pipeline portion 300 to generate faceted representations from processed voxel data according to the present disclosure. The voxel processing engine 110 may implement, support, or perform any aspect of the pipeline portion 300. In the example of Figure 3, the voxel processing engine 110 converts the voxel data 310 into a faceted representation 320. The voxel data 310 may be any voxel data accessed, generated, or processed according to the present disclosure (e.g., the voxel data 210, the labeled voxel data 220, the smoothed voxel data 230, the averaged voxel data 240, etc.).

To convert the voxel data 310 into a faceted representation 320 of an object, the voxel processing engine 110 may implement, apply, or perform any number of conversion techniques. In some examples, the voxel processing engine 110 may apply any form of marching cubes or any meshing technique that preserves topology of the voxel data 310 in converting the voxel data 310 into the faceted representation 320. For instance, the voxel processing engine 110 may use a tri-linear interpolation version of Marching Cube Algorithm, e.g., as described in Nielson, Gregory M. "On marching cubes" IEE Transactions on Visualization and Computer Graphics 9.3 (2003):283-297 ("Nielson"). The faceted representation 320 of an object generated from the voxel data may be further processed in order to smooth the mesh or adjust mesh elements.

As an example of such processing, the voxel processing engine 110 may adaptively perform a pressing process on the faceted representation 320 of the object. As used herein, a pressing process may refer to any mesh smoothing process applied to a mesh (or any other faceted representation) that alters the positioning of individual mesh elements to smooth the surface of a mesh or otherwise adjust or remove local features of the mesh. In that regard, pressing processes may be a form of mesh smoothing that the voxel processing engine 110 applies to remove unwanted local features of the faceted representation 320, e.g., to increase mesh quality. While various mesh pressing processes may exist, the effectiveness of conventional pressing processes may be constrained by the underlying voxel data from which the faceted representation 320 is generated. To address such constraints, the adaptive pressing technology of the present disclosure may provide capabilities to modify underlying voxel data, regenerate the faceted representation 320 from the modified voxel data, and reapply the pressing process on the regenerated faceted representation converted from the modified voxel data. Doing so may allow for smoothing of local features in a mesh with greater effectiveness.

To illustrate through Figure 3, the voxel processing engine 110 may perform a pressing process (e.g., mesh smoothing process) on the faceted representation 320 of an object generated from the voxel data 310. The output of the pressing process may be the pressed faceted representation 330. The pressing process may be constrained by voxel boundaries, assigned voxel densities, or other voxel characteristics assigned to the voxel data 310. After application of the pressing process, the voxel processing engine 110 may evaluate a degree to which the pressing process is constrained by the voxel densities (or other constraints), which may be any measure of the effectiveness of the pressing process on smoothing the faceted representation 320 to form the pressed faceted representation 330. To do so, the voxel processing engine 110 may apply any number of pressing reapplication criteria to measure pressing effectiveness, and the pressing reapplication criteria may set conditions as to whether the voxel processing engine 110 will adaptively reapply the pressing process (e.g., by modifying the voxel data 310 and reapplying the pressing process on the modified voxel data). Such pressing reapplication criteria may be based on a degree to which the pressing process is constrained by the voxel data 310.

Responsive to a determination that at least one pressing reapplication criterion is satisfied, the voxel processing engine 110 may reapply the pressing process. For instance, the voxel processing engine 110 may modify the voxel data 310 to obtain modified voxel data 340. As described in greater detail herein, the voxel processing engine 110 may modify the voxel data 310 in any way that decreases constraints in the voxel data 310 that limit the ability for a pressing process to adjust facet vertex locations, positions, or otherwise smooth facets in the faceted representation 320 of an object. After generating the modified voxel data 340, the voxel processing engine 110 may convert the modified voxel data 340 to form the faceted representation 320 of the object (e.g., by reapplying marching cubes, this time to the modified voxel data 340) and then perform the pressing process on the faceted representation 320 of the object formed from the modified voxel data 340. In that regard, the voxel processing engine 110 may iteratively re-mesh modified voxel data in order to reduce voxel constraints and increase the effectiveness of pressing processes applied to re-meshed faceted representations of an object.

The voxel processing engine 110 may apply any number of pressing reapplication criteria to evaluate the effectiveness of applied pressing processes and in determining whether to modify the voxel data 310 and reapply the pressing process. In some implementations, a pressing reapplication criterion applied by the voxel processing engine 110 is satisfied when an actual change to a given facet through the pressing process differs from a requested change to the given facet by the pressing process by more than a difference threshold due to a given voxel density constraint. To illustrate, conversion of voxel data into faceted representations may be constrained by voxel densities and voxel boundaries such that facets in the faceted representation 320 located within a given voxel of the voxel data 310 cannot extend beyond a boundary of the voxel data 310 and must positioned/set to satisfy the voxel density constraints of the given voxel. For instance, voxel density constraints may be set at the various corners of a given voxel.

Through a pressing process, the voxel processing engine 110 may smooth facets in the faceted representation 320 may moving the position (e.g., vertex coordinates) of facets to smooth bumps, adjust hole positions, or otherwise smooth a mesh surface of the faceted representation 320. In order to smooth a mesh surface, a pressing process may specify a requested change for a facet (e.g., an offset for the vertex location of one or more vertices of the facet/mesh element). However, such facet repositioning may be constrained by the voxel boundary or a voxel density of a given voxel that the facet is located within, and the actual change in the facet positioning may be to a lesser degree than requested by the pressing process to smooth a mesh surface. This difference in requested change and actual change via the pressing process may be measured by the voxel processing engine 110 and used to evaluate any number of pressing reapplication criteria.

As an illustrative example, a pressing process may compute requested change vectors computed for facet vertices in a faceted representation 320, which the voxel processing engine 110 may determine as a requested change for a given facet of the faceted representation 320. A requested change vector may specify a directional change to a given facet vertex that the processing process computes to smooth a mesh surface. An actual change for the given facet may be determined by the voxel processing engine as the actual change vectors for the facet vertices in performing the pressing process, and as constrained by the voxel density or boundary constraints of a given voxel that the given facet is located within.

That is, the actual change vector may be determined by the voxel processing engine 110 as the actual degree to which a given facet vertex moved as a result of the pressing process, whereas the requested change vectors may be the unconstrained repositioning of facet vertices that the pressing process computes for the faceted representation 320. When the difference between the requested change vector and the actual change vector of any facet vertex of the faceted representation 320 (or, in some implementations, a threshold number of facet vertices of the faceted representation 320) exceeds a difference threshold, the voxel processing engine 110 may determine that the pressing reapplication criteria are satisfied. **In** such cases, the pressing reapplication criteria may set discrete evaluation conditions by which to assess the effectiveness of pressing processes based on voxel constraints specified in underlying voxel data of an object.

In that regard, determination that the pressing reapplication criteria are satisfied may indicate that the voxel data 310 has constrained the pressing process beyond a tolerable threshold. To reduce such constraints, the voxel processing engine 110 may modify the voxel data 310 itself in order to reduce the impact of the constraints and improve the efficacy of the pressing process as applied to meshes generated from modified voxel data. For instance, the voxel processing engine 110 may modify the voxel data 310 to obtain the modified voxel data 340 by adjusting a given voxel density constraint in the voxel data 310. By modifying (e.g., increasing or decreasing) density constraints of a given voxel, the voxel processing engine 110 may increase or decrease the ability for facets to move outside the boundary of the given voxel without violating the density constraint specified for the given voxel.

For instance, the given voxel density constraint may be set in the voxel data 310 for a corner of a given voxel, and the voxel processing engine 110 may adjust the given voxel density constraint in the voxel data by lowering the given voxel density constraint when the requested change of the pressing process comprises pushing a bump in the voxel data outside the corner of the given voxel. As another example, the voxel processing engine 110 may adjust the given voxel density constraint in the voxel data by increasing the given voxel density constraint when the requested change of the pressing process comprises pushing a hole in the voxel data outside the corner of the given voxel. Thus, density constraints (e.g., normalized density values applicable to voxel corners) may be modified in voxel data to produce modified voxel data 340.

Then, by reapplying marching cubes (or any other meshing process) to the modified voxel data 340, the voxel processing engine 110 may generate a faceted representation 320 of an object with a lesser constraint on a pressing process than a previous iteration of the faceted representation 320. In that regard, the voxel processing engine 110 may re-mesh modified voxel data and then reapply the pressing process on the regenerated mesh. Note that the voxel processing engine 110 may modify voxel data and reapply a pressing process across multiple iterations, for example doing so when a pressing process performed on a faceted representation 320 generated from the modified voxel data 340 of a first iteration nonetheless satisfies the pressing reapplication criteria. In such examples, the voxel processing engine 110 may further modify the modified voxel data 340 (e.g., by further adjusting density constraints), again reapply marching cubes to the further modified voxel data 340, and again perform the pressing process on the resultant faceted representation of the object. The voxel processing engine 110 may continue to iterate through such steps until the output of the pressing process does not satisfy the pressing reapplication criteria.

Thus, in any of the ways described herein, the voxel processing engine 110 may adaptively perform a pressing process on a faceted representation 320 of an object. Such adaptive pressing features may increase the effectiveness of mesh smoothing processes performed on the faceted representation 320, which may in turn yield a higher-quality mesh output of an object.

Additionally or alternatively, the voxel processing engine 110 may process the faceted representation 320 of an object in various ways. For instance, the voxel processing engine 110 may perform a mesh cleaning process on the faceted representation 320 of the object to remove mesh elements in the faceted representation 320 identified as skinny elements according to the mesh cleaning process. Such mesh cleaning processes may include any suitable process to repair or remove skinny diagonals for triangular mesh elements, or various other cleaning techniques. As another example, the voxel processing engine 110 may perform a mesh smoothing process on the faceted representation 320 of the object, such as a tuck-untuck smoothing process.

Accordingly, the voxel processing engine 110 may further process a faceted representation 320 generated from voxel data processed according to the present disclosure. The various mesh processing techniques described herein, including cleaning, adaptive pressing, and/or smoothing, may further refine an output mesh. Through a combination of the various voxel processing and faceted representation processing pipeline techniques presented herein, a smoothed mesh that represents an original topology with increased fidelity can be generated. Such voxel processing features of the present disclosure may support the generation of smoothed meshes from binary voxel data output from topology optimizations, doing so in a way that preserves the object topology generated from the topology optimizations at least to a threshold degree.

The voxel processing engine 110 may, in any way, support physical manufacture of faceted representations generated according to the present disclosure. For example, the voxel processing engine 110 may include system elements to physically manufacture the final version of the faceted representation 320 processed according to the voxel processing pipelines presented herein. As another example, the voxel processing engine 110 may package the faceted representation 320 into a network communication format and transmit the packaged data to a 3D printer or other manufacturing system for physical construction of the faceted representation 320 of the object. As yet another example, the voxel processing engine 110 may provide the faceted representation 320 for further simulation and analysis, e.g., to CAE systems or manufacture simulation systems.

While many voxel processing features have been described herein through illustrative examples presented through various figures, the voxel access engine 108 or the voxel processing engine 110 may implement any combination of the voxel processing technology described herein.

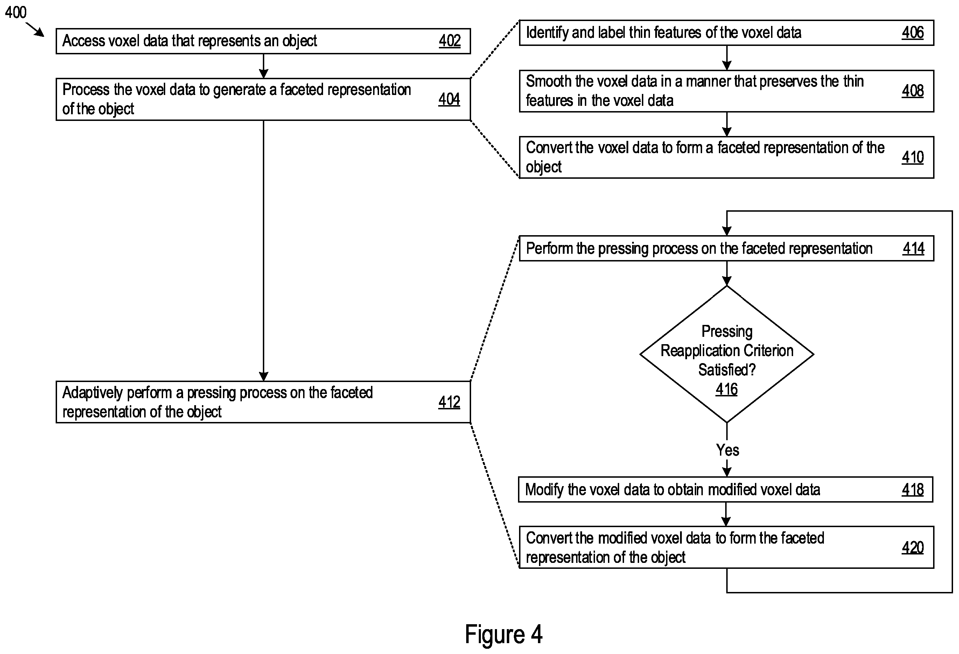

Figure 4 shows an example of logic that a system may implement to support voxel processing for generation of faceted representations of objects according to the present disclosure. For example, the computing system 100 may implement the logic 400 as hardware, executable instructions stored on a machine-readable medium, or as a combination of both. The computing system 100 may implement the logic 400 via the voxel access engine 108 and the voxel processing engine 110, through which the computing system 100 may perform or execute the logic 400 as a method to support processing of voxel data to generate faceted representations of objects. The following description of the logic 400 is provided using the voxel access engine 108 and the voxel processing engine 110 as examples. However, various other implementation options by computing systems are possible.

In implementing the logic 400, the voxel access engine 108 may access voxel data that represents an object (402). In implementing the logic 400, the voxel processing engine 110 may process the voxel data to generate a faceted representation of the object (404), including by identifying and labeling thin features of the voxel data (406), smoothing the voxel data in a manner that preserves the thin features in the voxel data (408), and converting the voxel data to form the faceted representation of the object (410). The voxel processing engine 110 may do in any of the ways described herein.

In implementing the logic 400, the voxel processing engine 110 may also adaptively perform a pressing process on the faceted representation of the object (412). The voxel processing engine 110 may do so by performing the pressing process on the faceted representation of the object (414), an responsive to a determination that a pressing reapplication criterion is satisfied (416), modifying the voxel data to obtain modified voxel data (418), converting the modified voxel data to form the faceted representation of the object (420); and performing the pressing process on the faceted representation (414), this time on the faceted representation formed from the modified voxel data. The voxel processing engine 110 may continue to iterate through modifying the voxel data, converting the modified voxel data into the faceted representation, and performing the pressing process on the faceted representation formed from the modified voxel data until the pressing reapplication criteria is no longer satisfied.

The logic 400 shown in Figure 4 provides an illustrative example by which a computing system 100 may support voxel processing for generation of faceted representations of objects according to the present disclosure. Additional or alternative steps in the logic 400 are contemplated herein, including according to any of the various features described herein for the voxel access engine 108, the voxel processing engine 110, or any combinations thereof.

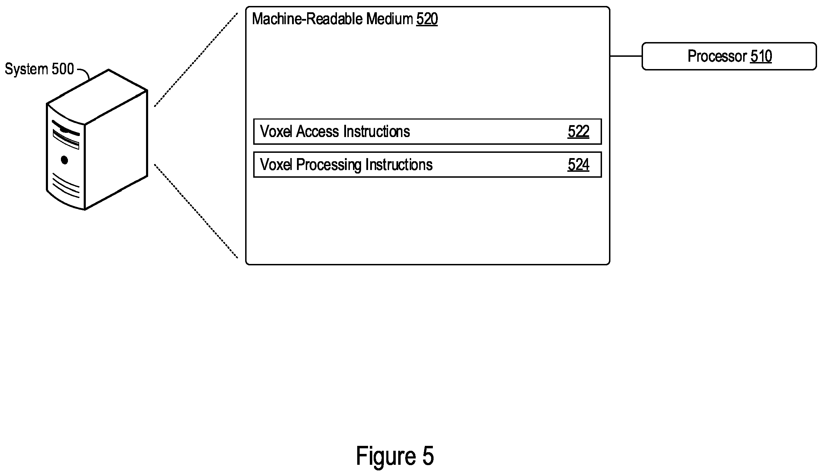

Figure 5 shows an example of a computing system that supports voxel processing for generation of faceted representations of objects according to the present disclosure. The computing system 500 may include a processor 510, which may take the form of a single or multiple processors. The processor(s) 510 may include a central processing unit (CPU), microprocessor, or any hardware device suitable for executing instructions stored on a machine-readable medium. The computing system 500 may include a machine-readable medium 520. The machine-readable medium 520 may take the form of any non-transitory electronic, magnetic, optical, or other physical storage device that stores executable instructions, such as the voxel access instructions 522 and the voxel processing instructions 524 shown in Figure 5. As such, the machine-readable medium 520 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The computing system 500 may execute instructions stored on the machine-readable medium 520 through the processor 510. Executing the instructions (e.g., the voxel access instructions 522 and/or the voxel processing instructions 524) may cause the computing system 500 to perform any of the voxel processing features described herein, including according to any of the features of the voxel access engine 108, the voxel processing engine 110, or combinations of both.

For example, execution of the voxel access instructions 522 by the processor 510 may cause the computing system 500 to access voxel data that represents an object. Execution of the voxel processing instructions 524 by the processor 510 may cause the computing system 500 to process the voxel data to generate a faceted representation (320) of the object, including by identifying and labeling thin features of the voxel data, smoothing the voxel data in a manner that preserves the thin features in the voxel data, and converting the voxel data, after the smoothing, to form the faceted representation of the object. Execution of the voxel processing instructions 524 by the processor 510 may also cause the computing system 500 to adaptively perform a pressing process on the faceted representation of the object, including by performing the pressing process on the faceted representation of the object (wherein the pressing process is constrained by voxel densities assigned to the voxel data) and responsive to a determination that a pressing reapplication criterion is satisfied, modifying the voxel data to obtain modified voxel data, converting the modified voxel data to form the faceted representation of the object, and performing the pressing process on the faceted representation of the object formed through the modified voxel data.

Any additional or alternative voxel processing features as described herein may be implemented via the voxel access instructions 522, voxel processing instructions 524, or a combination of both.

The systems, methods, devices, and logic described above, including the voxel access engine 108 and the voxel processing engine 110, may be implemented in many different ways in many different combinations of hardware, logic, circuitry, and executable instructions stored on a machine-readable medium. For example, the voxel access engine 108, the voxel processing engine 110, or combinations thereof, may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. A product, such as a computer program product, may include a storage medium and machine-readable instructions stored on the medium, which when executed in an endpoint, computer system, or other device, cause the device to perform operations according to any of the description above, including according to any features of the voxel access engine 108, the voxel processing engine 110, or combinations thereof.

The processing capability of the systems, devices, and engines described herein, including the voxel access engine 108 and the voxel processing engine 110, may be distributed among multiple system components, such as among multiple processors and memories, optionally including multiple distributed processing systems or cloud/network elements. Parameters, databases, and other data structures may be separately stored and managed, may be incorporated into a single memory or database, may be logically and physically organized in many different ways, and may be implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

While various examples have been described above, many more implementations are possible within the scope of the enclosed claims.

## Claims

1. A method comprising:
by a computing system (100, 500):
- accessing (402) voxel data (210, 310) that represents an object;
- processing (404) the voxel data (210, 310) to generate a faceted representation (320) of the object, including by:
identifying and labeling (406) thin features of the voxel data (210, 310), wherein thin features of the voxel data (210, 310) are solid areas of the voxel data (210, 310) being only one, two or a threshold number of voxels wide on a certain design axis;
smoothing (408) the voxel data (210, 310) in a manner that preserves the thin features in the voxel data (210, 310); and
converting (410) the voxel data (210, 310), after the smoothing, to form the faceted representation (320) of the object; and
- adaptively performing (412) a pressing process on the faceted representation (320) of the object, wherein the pressing process is a mesh smoothing process applied to the faceted representation (320) of the object, including by:
performing (414) the pressing process on the faceted representation (320) of the object, wherein the pressing process is constrained by voxel densities assigned to the voxel data (210, 310); and
responsive to a determination that a pressing reapplication criterion is satisfied (416):
modifying (418) the voxel data (210, 310) to obtain modified voxel data (340);
converting (420) the modified voxel data (340) to form the faceted representation (320) of the object; and
performing (414) the pressing process on the faceted representation (320) of the object formed from the modified voxel data (340);
wherein the pressing reapplication criterion is satisfied when an actual change to a given facet through the pressing process differs from a requested change to the given facet by the pressing process by more than a difference threshold due to a given voxel density constraint, and
wherein modifying the voxel data (210, 310) to obtain the modified voxel data (340) comprises adjusting the given voxel density constraint in the voxel data (210, 310);
wherein the given voxel density constraint is set for a corner of a given voxel; and wherein adjusting the given voxel density constraint in the voxel data (210, 310) comprises:
lowering the given voxel density constraint when the requested change of the pressing process comprises pushing a bump in the voxel data (210, 310) outside the corner of the given voxel, or
increasing the given voxel density constraint when the requested change of the pressing process comprises pushing a hole in the voxel data (210, 310) outside the corner of the given voxel;
wherein a final version of the faceted representation (320) of the object is physically manufactured, or the faceted representation (320) of the object is packaged into a network communication format and the packaged data is transmitted to a 3D printer or other manufacturing system for physical construction of the faceted representation (320) of the object.

2. The method according to claim 1, wherein processing the voxel data (210, 310) to generate the faceted representation (320) of the object further comprises performing a voxel averaging process on the voxel data (210, 310) after the smoothing of the voxel data (210, 310).

3. The method according to claim 1 or 2, further comprising performing a mesh cleaning process on the faceted representation (320) of the object to remove mesh elements in the faceted representation (320) identified as skinny elements according to the mesh cleaning process.

4. A system (100) comprising:
a voxel access engine (108) configured to access voxel data (210, 310) that represents an object; and
a voxel processing engine (110) configured to:
process the voxel data (210, 310) to generate a faceted representation (320) of the object, including by:
identifying and labeling thin features of the voxel data (210, 310), wherein thin features of the voxel data (210, 310) are solid areas of the voxel data (210, 310) being only one, two or a threshold number of voxels wide on a certain design axis;
smoothing the voxel data (210, 310) in a manner that preserves the thin features in the voxel data (210, 310); and
converting the voxel data (210, 310), after the smoothing, to form the faceted representation (320) of the object; and
adaptively perform a pressing process on the faceted representation (320) of the object, wherein the pressing process is a mesh smoothing process applied to the faceted representation (320) of the object, including by:
performing the pressing process on the faceted representation (320) of the object, wherein the pressing process is constrained by voxel densities assigned to the voxel data (210, 310); and
responsive to a determination that a pressing reapplication criterion is satisfied:
modifying the voxel data (210, 310) to obtain modified voxel data (340);
converting the modified voxel data (340) to form the faceted representation (320) of the object; and
performing the pressing process on the faceted representation (320) of the object formed through the modified voxel data (340);
wherein the pressing reapplication criterion is satisfied when an actual change to a given facet through the pressing process differs from a requested change to the given facet by the pressing process by more than a difference threshold due to a given voxel density constraint, and
wherein the voxel processing engine (110) is configured to modify the voxel data (210, 310) to obtain the modified voxel data (340) by adjusting the given voxel density constraint in the voxel data;
wherein the given voxel density constraint is set for a corner of a given voxel, and
wherein the voxel processing engine (110) is configured to adjust the given voxel density constraint in the voxel data (210, 310) by lowering the given voxel density constraint when the requested change of the pressing process comprises pushing a bump in the voxel data (210, 310) outside the corner of the given voxel or increasing the given voxel density constraint when the requested change of the pressing process comprises pushing a hole in the voxel data (210, 310) outside the corner of the given voxel;
wherein the voxel processing engine (110) includes system elements to physically manufacture a final version of the faceted representation (320) of the object, or the voxel processing engine (110) is configured to package the faceted representation (320) of the object into a network communication format and transmit the packaged data to a 3D printer or other manufacturing system for physical construction of the faceted representation (320) of the object.

5. The system (100) according to claim 4, wherein the voxel processing engine (110) is configured to process the voxel data (210, 310) to generate the faceted representation (320) of the object further by performing a voxel averaging process on the voxel data (210, 310) after the smoothing of the voxel data (210, 310).

6. The system (100) according to claim 4 or 5, wherein the voxel processing engine (110) is further configured to perform a mesh cleaning process on the faceted representation (320) of the object to remove mesh elements in the faceted representation (320) identified as skinny elements according to the mesh cleaning process.

7. A non-transitory machine-readable medium (520) comprising instructions (522, 524) that, when executed by a processor (510), cause a computing system (500) to perform a method according to any of claims 1-3.

## Patentansprüche

1. Verfahren, umfassend:
durch ein Rechensystem (100, 500):
- Zugreifen (402) auf Voxeldaten (210, 310), die ein Objekt darstellen;
- Verarbeiten (404) der Voxeldaten (210, 310), um eine facettierte Darstellung (320) des Objekts zu erzeugen, einschließlich durch:
Identifizieren und Kennzeichnen (406) dünner Merkmale der Voxeldaten (210, 310), wobei dünne Merkmale der Voxeldaten (210, 310) feste Bereiche der Voxeldaten (210, 310) sind, die auf einer bestimmten Designachse nur ein, zwei oder eine Schwellenanzahl von Voxeln breit sind;
Glätten (408) der Voxeldaten (210, 310) auf eine Weise, die die dünnen Merkmale in den Voxeldaten (210, 310) bewahrt; und
Umwandeln (410) der Voxeldaten (210, 310) nach dem Glätten, um die facettierte Darstellung (320) des Objekts zu bilden; und
- adaptives Durchführen (412) eines Pressprozesses an der facettierten Darstellung (320) des Objekts, wobei der Pressprozess ein Gitterglättungsprozess ist, der auf die facettierte Darstellung (320) des Objekts angewendet wird, einschließlich durch:
Durchführen (414) des Pressprozesses an der facettierten Darstellung (320) des Objekts, wobei der Pressprozess durch Voxeldichten beschränkt wird, die den Voxeldaten (210, 310) zugewiesen sind; und
in Reaktion auf eine Bestimmung, dass ein Pressungswiederanwendungskriterium erfüllt wird (416):
Modifizieren (418) der Voxeldaten (210, 310), um modifizierte Voxeldaten (340) zu erhalten;
Umwandeln (420) der modifizierten Voxeldaten (340), um die facettierte Darstellung (320) des Objekts zu bilden; und
Durchführen (414) des Pressprozesses an der facettierten Darstellung (320) des Objekts, das aus den modifizierten Voxeldaten (340) gebildet ist;
wobei das Pressungswiederanwendungskriterium erfüllt wird, wenn sich eine tatsächliche Änderung an einer gegebenen Facette durch den Pressprozess von einer angeforderten Änderung an der gegebenen Facette durch den Pressprozess um mehr als einen Differenzschwellenwert aufgrund einer gegebenen Voxeldichtebeschränkung unterscheidet, und
wobei das Modifizieren der Voxeldaten (210, 310), um die modifizierten Voxeldaten (340) zu erhalten, Anpassen der gegebenen Voxeldichtebeschränkung in den Voxeldaten (210, 310) umfasst;
wobei die gegebene Voxeldichtebeschränkung für eine Ecke eines gegebenen Voxels festgelegt ist; und wobei das Anpassen der gegebenen Voxeldichtebeschränkung in den Voxeldaten (210, 310) Folgendes umfasst:
Verringern der gegebenen Voxeldichtebeschränkung, wenn die angeforderte Änderung des Pressprozesses Schieben einer Erhebung in den Voxeldaten (210, 310) außerhalb der Ecke des gegebenen Voxels umfasst, oder
Erhöhen der gegebenen Voxeldichtebeschränkung, wenn die angeforderte Änderung des Pressprozesses Schieben eines Lochs in den Voxeldaten (210, 310) außerhalb der Ecke des gegebenen Voxels umfasst;
wobei eine endgültige Version der facettierten Darstellung (320) des Objekts physisch hergestellt wird oder die facettierte Darstellung (320) des Objekts in ein Netzwerkkommunikationsformat verpackt wird und die verpackten Daten an einen 3D-Drucker oder ein anderes Fertigungssystem zur physischen Herstellung der facettierten Darstellung (320) des Objekts übertragen werden.

2. Verfahren nach Anspruch 1, wobei das Verarbeiten der Voxeldaten (210, 310) zum Erzeugen der facettierten Darstellung (320) des Objekts ferner Durchführen eines Voxelmittelungsprozesses an den Voxeldaten (210, 310) nach dem Glätten der Voxeldaten (210, 310) umfasst.

3. Verfahren nach Anspruch 1 oder 2, ferner umfassend Durchführen eines Gitterreinigungsprozesses an der facettierten Darstellung (320) des Objekts, um Gitterelemente in der facettierten Darstellung (320), die als dünne Elemente identifiziert werden, gemäß dem Gitterreinigungsprozess zu entfernen.

4. System (100), umfassend:
eine Voxelzugriffs-Engine (108), die dazu ausgelegt ist, auf Voxeldaten (210, 310) zuzugreifen, die ein Objekt darstellen; und
eine Voxelverarbeitungs-Engine (110), die zu Folgendem ausgelegt ist:
Verarbeiten der Voxeldaten (210, 310), um eine facettierte Darstellung (320) des Objekts zu erzeugen, einschließlich durch:
Identifizieren und Kennzeichnen dünner Merkmale der Voxeldaten (210, 310), wobei dünne Merkmale der Voxeldaten (210, 310) feste Bereiche der Voxeldaten (210, 310) sind, die auf einer bestimmten Designachse nur ein, zwei oder eine Schwellenanzahl von Voxeln breit sind;
Glätten der Voxeldaten (210, 310) auf eine Weise, die die dünnen Merkmale in den Voxeldaten (210, 310) bewahrt; und
Umwandeln der Voxeldaten (210, 310) nach dem Glätten, um die facettierte Darstellung (320) des Objekts zu bilden; und
adaptives Durchführen eines Pressprozesses an der facettierten Darstellung (320) des Objekts, wobei der Pressprozess ein Gitterglättungsprozess ist, der auf die facettierte Darstellung (320) des Objekts angewendet wird, einschließlich durch:
Durchführen des Pressprozesses an der facettierten Darstellung (320) des Objekts, wobei der Pressprozess durch Voxeldichten beschränkt wird, die den Voxeldaten (210, 310) zugewiesen sind; und
in Reaktion auf eine Bestimmung, dass ein Pressungswiederanwendungskriterium erfüllt wird:
Modifizieren der Voxeldaten (210, 310), um modifizierte Voxeldaten (340) zu erhalten;
Umwandeln der modifizierten Voxeldaten (340), um die facettierte Darstellung (320) des Objekts zu bilden; und
Durchführen des Pressprozesses an der facettierten Darstellung (320) des Objekts, das durch die modifizierten Voxeldaten (340) gebildet wird;
wobei das Pressungswiederanwendungskriterium erfüllt wird, wenn sich eine tatsächliche Änderung an einer gegebenen Facette durch den Pressprozess von einer angeforderten Änderung an der gegebenen Facette durch den Pressprozess um mehr als einen Differenzschwellenwert aufgrund einer gegebenen Voxeldichtebeschränkung unterscheidet, und
wobei die Voxelverarbeitungs-Engine (110) dazu ausgelegt ist, die Voxeldaten (210, 310) durch Anpassen der gegebenen Voxeldichtebeschränkung in den Voxeldaten zu modifizieren, um die modifizierten Voxeldaten (340) zu erhalten;
wobei die gegebene Voxeldichtebeschränkung für eine Ecke eines gegebenen Voxels festgelegt ist, und
wobei die Voxelverarbeitungs-Engine (110) dazu ausgelegt ist, die gegebene Voxeldichtebeschränkung in den Voxeldaten (210, 310) anzupassen durch Verringern der gegebenen Voxeldichtebeschränkung, wenn die angeforderte Änderung des Pressprozesses Schieben einer Erhebung in den Voxeldaten (210, 310) außerhalb der Ecke des gegebenen Voxels umfasst, oder Erhöhen der gegebenen Voxeldichtebeschränkung, wenn die angeforderte Änderung des Pressprozesses Schieben eines Lochs in den Voxeldaten (210, 310) außerhalb der Ecke des angegebenen Voxels umfasst;
wobei die Voxelverarbeitungs-Engine (110) Systemelemente zum physischen Herstellen einer endgültigen Version der facettierten Darstellung (320) des Objekts beinhaltet oder die Voxelverarbeitungs-Engine (110) dazu ausgelegt ist, die facettierte Darstellung (320) des Objekts in ein Netzwerkkommunikationsformat zu verpacken und die verpackten Daten an einen 3D-Drucker oder ein anderes Fertigungssystem zur physischen Herstellung der facettierten Darstellung (320) des Objekts zu übertragen.

5. System (100) nach Anspruch 4, wobei die Voxelverarbeitungs-Engine (110) dazu ausgelegt ist, die Voxeldaten (210, 310) zum Erzeugen der facettierte Darstellung (320) des Objekts ferner durch Durchführen eines Voxelmittelungsprozesses an den Voxeldaten (210, 310) nach dem Glätten der Voxeldaten (210, 310) zu verarbeiten.

6. System (100) nach Anspruch 4 oder 5, wobei die Voxelverarbeitungs-Engine (110) ferner dazu ausgelegt ist, einen Gitterreinigungsprozess an der facettierten Darstellung (320) des Objekts durchzuführen, um Gitterelemente in der facettierten Darstellung (320) zu entfernen, die als dünne Elemente gemäß dem Gitterreinigungsprozess identifiziert werden.

7. Nichtflüchtiges maschinenlesbares Medium (520), umfassend Anweisungen (522, 524), die, wenn sie von einem Prozessor (510) ausgeführt werden, ein Rechensystem (500) dazu veranlassen, ein Verfahren nach einem der Ansprüche 1-3 durchzuführen.

## Revendications

1. Procédé comprenant les étapes suivantes :
au moyen d'un système informatique (100, 500) :
- accéder (402) à des données de voxels (210, 310) qui représentent un objet ;
- traiter (404) des données de voxels (210, 310) pour générer une représentation à facettes (320) de l'objet, y compris :
en identifiant et en étiquetant (406) des caractéristiques minces des données de voxels (210, 310), les caractéristiques minces des données de voxels (210, 310) étant des zones solides des données de voxels (210, 310) n'étant larges que d'un, de deux ou d'un nombre seuil de voxels sur un certain axe de conception ;
en lissant (408) des données de voxels (210, 310) de manière à préserver les caractéristiques minces dans les données de voxels (210, 310) ; et
en convertissant (410) les données de voxels (210, 310), après le lissage, pour former la représentation à facettes (320) de l'objet ; et
- exécuter de manière adaptative (412) un processus de pression sur la représentation à facettes (320) de l'objet, où le processus de pression est un procédé de lissage de maillage appliqué à la représentation à facettes (320) de l'objet, y compris :
en exécutant (414) le processus de pressage sur la représentation à facettes (320) de l'objet, le processus de pressage étant contraint par des densités de voxels attribuées aux données de voxels (210, 310) ; et
en réponse à une détermination qu'un critère de réapplication de pression est satisfait (416) :
modifier (418) les données de voxels (210, 310) pour obtenir des données de voxels modifiées (340) ;
convertir (420) les données de voxels modifiées (340) pour former la représentation à facettes (320) de l'objet ; et
exécuter (414) le processus de pression sur la représentation à facettes (320) de l'objet formée à partir des données de voxels modifiées (340) ;
où le critère de réapplication de pression est satisfait lorsqu'un changement réel d'une facette donnée par le processus de pression diffère d'un changement demandé de la facette donnée par le processus de pression de plus d'un seuil de différence dû à une contrainte de densité de voxel donnée, et
où la modification des données de voxels (210, 310) pour obtenir les données de voxels modifiées (340) comprend l'ajustement de la contrainte de densité de voxels donnée dans les données de voxels (210, 310) ;
où la contrainte de densité de voxels donnée est définie pour un coin d'un voxel donné ; et où l'ajustement de la contrainte de densité de voxels donnée dans les données de voxels (210, 310) comprend les étapes suivantes :
abaisser la contrainte de densité de voxel donnée lorsque la modification demandée du processus de pression comprend de pousser une protubérance dans les données de voxels (210, 310) à l'extérieur du coin du voxel donné, ou
augmenter la contrainte de densité de voxel donnée lorsque la modification demandée du processus de pression comprend de pousser un creux dans les données de voxels (210, 310) à l'extérieur du coin du voxel donné ;
où une version finale de la représentation à facettes (320) de l'objet est fabriquée physiquement, ou la représentation à facettes (320) de l'objet est empaquetée dans un format de communication réseau, et les données empaquetées sont transmises à une imprimante 3D ou à un autre système de fabrication pour la construction physique de la représentation à facettes (320) de l'objet.

2. Procédé selon la revendication 1, dans lequel le traitement des données de voxels (210, 310) pour générer la représentation à facettes (320) de l'objet comprend en outre l'exécution d'un processus de moyennage de voxels sur les données de voxels (210, 310) après le lissage des données de voxels (210, 310).

3. Procédé selon la revendication 1 ou la revendication 2, comprenant en outre l'exécution d'un processus de nettoyage de maillage sur la représentation à facettes (320) de l'objet pour enlever des éléments de maillage dans la représentation à facettes (320) identifiés comme étant des éléments très allongés selon le processus de nettoyage de maillage.

4. Système (100) comprenant :
un moteur d'accès aux voxels (108) configuré pour accéder à des données de voxels (210, 310) qui représentent un objet ; et
un moteur de traitement de voxels (110) configuré pour :
traiter les données de voxels (210, 310) pour générer une représentation à facettes (320) de l'objet, y compris :
en identifiant et en étiquetant des caractéristiques minces des données de voxels (210, 310), les caractéristiques minces des données de voxels (210, 310) étant des zones solides des données de voxels (210, 310) n'étant larges que d'un, de deux ou d'un nombre seuil de voxels sur un certain axe de conception :
en lissant les données de voxels (210, 310) de manière à préserver les caractéristiques minces dans les données de voxels (210, 310) ; et
en convertissant les données de voxels (210, 310), après le lissage, pour former la représentation à facettes (320) de l'objet ; et
exécuter de manière adaptative un processus de pression sur la représentation à facettes (320) de l'objet, où le processus de pression est un procédé de lissage de maillage appliqué à la représentation à facettes (320) de l'objet, y compris :
en exécutant le processus de pressage sur la représentation à facettes (320) de l'objet, le processus de pressage étant contraint par des densités de voxels attribuées aux données de voxels (210, 310) ; et
en réponse à une détermination qu'un critère de réapplication de pression est satisfait :
modifier les données de voxels (210, 310) pour obtenir des données de voxels modifiées (340) ;
convertir les données de voxels modifiées (340) pour former la représentation à facettes (320) de l'objet ; et
exécuter le processus de pression sur la représentation à facettes (320) de l'objet formée par les données de voxels modifiées (340) ;
où le critère de réapplication de pression est satisfait lorsqu'un changement réel d'une facette donnée par le processus de pression diffère d'un changement demandé de la facette donnée par le processus de pression de plus d'un seuil de différence dû à une contrainte de densité de voxel donnée, et
où le moteur de traitement de voxels (110) est configuré pour modifier les données de voxels (210, 310) afin d'obtenir les données de voxels modifiées (340) par ajustement de la contrainte de densité de voxels donnée dans les données de voxels ;
où la contrainte de densité de voxel donnée est définie pour un coin d'un voxel donné, et
où le moteur de traitement de voxel (110) est configuré pour ajuster la contrainte de densité de voxel donnée dans les données de voxels (210, 310) en abaissant la contrainte de densité de voxel donnée lorsque la modification demandée du processus de pression comprend de pousser une protubérance dans les données de voxels (210, 310) à l'extérieur du coin du voxel donné ou d'augmenter la contrainte de densité de voxel donnée lorsque la modification demandée du processus de pression comprend de pousser un trou dans les données de voxels (210, 310) en dehors du coin du voxel donné ;
où le moteur de traitement de voxel (110) comprend des éléments de système pour fabriquer physiquement une version finale de la représentation à facettes (320) de l'objet, ou le moteur de traitement de voxel (110) est configuré pour empaqueter la représentation à facettes (320) de l'objet dans un format de communication réseau et transmettre les données empaquetées à une imprimante 3D ou à un autre système de fabrication pour construire physiquement la représentation à facettes (320) de l'objet.

5. Système (100) selon la revendication 4, dans lequel le moteur de traitement de voxels (110) est configuré pour traiter les données de voxels (210, 310) pour générer la représentation à facettes (320) de l'objet en exécutant en outre un processus de moyennage de voxels sur les données de voxels (210, 310) après le lissage des données de voxels (210, 310).

6. Système (100) selon la revendication 4 ou la revendication 5, dans lequel le moteur de traitement de voxels (110) est en outre configuré pour exécuter un processus de nettoyage de maillage sur la représentation à facettes (320) de l'objet pour supprimer des éléments de maillage dans la représentation à facettes (320) identifiés comme des éléments très allongés selon le processus de nettoyage de maillage.

7. Support non transitoire (520) lisible par machine comprenant des instructions (522, 524) qui, lorsqu'elles sont exécutées par un processeur (510), amènent un système informatique (500) à réaliser un procédé selon l'une quelconque des revendications 1 à 3.
